# EUROPÄISCHE PATENTSCHRIFT

(11) **EP 2 343 453 B1**
(45) Veröffentlichungstag und Bekanntmachung des Hinweises auf die Patenterteilung: **04.03.2015**
(21) Anmeldenummer: 10193679.7
(22) Anmeldetag: 03.12.2010
(51) Int. Cl.: F03D 7/02, F03D 11/00

(54) **Verfahren zum Betreiben einer Windenergieanlage**
Method for operating a wind turbine
Procédé de fonctionnement d'une éolienne

(30) Priorität: 06.01.2010 DE 102010000707
(43) Veröffentlichungstag der Anmeldung: 13.07.2011
(73) Patentinhaber: Senvion SE, 22297 Hamburg (DE)
(72) Erfinder: Eusterbarkey, Carsten, 25813, Simonsberg (DE); Altemark, Jens, 24768, Rendsburg (DE)
(74) Vertreter: Grebner, Christian Georg Rudolf

(56) Entgegenhaltungen:
- WO-A1-2004/111443
- WO-A2-2008/009354
- DE-A1-102007 027 849
- DE-A1-102007 058 746

## Beschreibung

Die Erfindung betrifft ein Verfahren zum Betreiben einer Windenergieanlage, die einen an einer Maschinengondel angeordneten Rotor aufweist, wobei die Maschinengondel auf einem Turm angeordnet ist, wobei der Rotor in eine Stillstandsposition gebracht wird. Darüber hinaus betrifft die Erfindung eine Windenergieanlage mit einem an einer Maschinengondel angeordneten Rotor, wobei die Maschinengondel auf einem Turm angeordnet ist, wobei eine Stillsetzungsvorrichtung für den Rotor vorgesehen ist, so dass der Rotor in einer Stillstandsposition verdrehsicher gehalten wird oder ist. Außerdem betrifft die Erfindung einen Windpark mit wenigstens einer Windenergieanlage.

Windenergieanlagen der Patentanmeldung sind unter der Bezeichnung 5M, MM92, MM82, MM70 und MD77 bekannt.

Diese Windenergieanlagen weisen im Allgemeinen einen Turm auf, der auf Boden oder einem Gewässergrund (offshore) angeordnet wird. Ferner ist auf dem Turm ein um eine im Wesentlichen vertikal verlaufende Drehachse verdrehbare Maschinengondel montiert, wobei an der Maschinengondel ein um eine im Wesentlichen in Horizontalrichtung verlaufende oder leicht geneigte Rotorachse drehbar befestigter Rotor mit im Allgemeinen drei Rotorblättern angeordnet ist. Diese bekannten Windenergieanlagen weisen einen Rotor mit drei an einer Rotornabe angeordneten Rotorblättern auf, wobei der Rotor zur Erzeugung einer elektrischen Leistung mit einem Generator gekoppelt ist. Der Generator ist ferner mit einem elektrischen Netz eines Netzbetreibers gekoppelt, um erzeugte elektrische Energie einzuspeisen.

Zur Reparatur oder zu Wartungszwecken der Windenergieanlage wird der Rotor angehalten und entsprechend arretiert, so dass das Wartungspersonal bei einer stillgesetzten Windenergieanlage bzw. einem stillgesetzten Rotor die Wartungsmaßnahmen ungehindert durchführen kann.

Werden die Windenergieanlagen offshore, d.h. in einem Gewässer angeordnet, wird das Wartungspersonal unter Verwendung eines Helikopters zu der zu wartenden Windenergieanlage geflogen, wobei hierbei die Windenergieanlage stillgesetzt wird. Beispielsweise ist in WO-A-2004/111443 ein Verfahren zur Abschaltung einer Offshore-Windenergieanlage mittels einer drahtlosen Fernbedienung bzw. Fernabschaltung erfolgt.

In WO-A-2008/009354 sind ein Verfahren zum Betreiben einer Windenergieanlage und eine Windenergieanlage offenbart. Hierbei wird die Windenergieanlage nach Auslösen eines Abschaltsignals von einer einem Betriebsführungssystem der Windenergieanlage logisch übergeordneten Sicherheitsabschalteinrichtung abgeschaltet, wobei die Windenergieanlage mittels einer von der Windenergieanlage räumlich getrennten Bedieneinrichtung nach einer Sicherheitsabschaltung zum Betrieb freigegeben wird. Dazu ist vorgesehen, dass nach der Sicherheitsabschaltung der Windenergieanlage und vor der Freigabe der Windenergieanlage diese anhand von Betriebsdaten über und/oder von der Windenergieanlage räumlich geprüft wird.

Ausgehend von diesem Stand der Technik besteht die Aufgabe der Erfindung darin, die Sicherheit bzw. die Sicherheitsmaßnahmen vor der Durchführung von Wartungsarbeiten an Windenergieanlagen zu erhöhen.

Zur Lösung der Aufgabe wird ein Verfahren zum Betreiben einer Windenergieanlage, die einen an einer Maschinengondel angeordneten Rotor aufweist, wobei die Maschinengondel auf einem Turm angeordnet ist, wobei der Rotor in eine Stillstandsposition gebracht wird, dadurch weitergebildet, dass die Stillstandsposition des Rotors jeweils von zwei oder mehr unabhängig voneinander betriebenen oder betreibbaren Erfassungseinrichtungen unabhängig erfasst wird, wobei die durch eine erste Erfassungseinrichtung erfasste Stillstandsposition des Rotors verifiziert wird und wobei die durch die zweite Erfassungseinrichtung erfasste Stillstandsposition des Rotors verifiziert wird, wobei nach Verifizierung der durch die wenigstens zwei Erfassungseinrichtungen erfassten Stillstandspositionen mit einer vorbestimmten Stillstandsposition des Rotors mittels einer Signaleinrichtung, insbesondere einer Signaleinrichtung der Windenergieanlage, der Stillstand des Rotors angezeigt wird.

Die Erfindung beruht auf dem Gedanken, dass zur bzw. vor Durchführung von Wartungsarbeiten einer Windenergieanlage, insbesondere einer Offshore-Windenergieanlage, die Windenergieanlage und damit auch der Rotor der Windenergieanlage stillgesetzt werden. Hierzu wird der Rotor in eine Stillstandsposition gedreht und entsprechend gebremst und gebremst gehalten oder mittels einer Arretiervorrichtung arretiert. Dabei ist vorzugsweise vorgesehen, dass die Maschinengondel in einer bevorzugten Position auf dem Turm mittels einer Gondelarretiereinrichtung arretiert wird und in dieser arretierten Position für eine vorbestimmte Zeitdauer gehalten wird. In der arretierten Position der Maschinengondel ist oder wird der Rotor in seine Stillstandsposition gebracht.

Bevorzugterweise wird bei der Stillsetzung des Rotors der Rotor in eine Y-Stellung gebracht, so dass bei einem dreiblättrigen Rotor ein Rotorblatt senkrecht nach unten weisend angeordnet wird. In einer alternativen und bevorzugten Stillstandsposition des Rotors ist ein Rotorblatt des Rotors mit drei Rotorblättern in der um 90° zur Vertikalen gedrehten Y-Stellung als waagerechtes Rotorblatt angeordnet. Wird beispielsweise das Wartungspersonal mittels eines Helikopters zu der zu wartenden Windenergieanlage geflogen, wird z. B. beim Anflug der Offshore-Windenergieanlage die Stillsetzung der Windenergieanlage vom Helikopter aus per Funk angefordert, wobei die Stillsetzung der Windenergieanlage bzw. die Stillsetzung des Rotors über eine Fernüberwachung bzw. ein Fernüberwachungssystem eingeleitet wird. Dazu wird der Rotor in einer vorbestimmten Position festgebremst.

Erfindungsgemäß erfolgen die Einleitung der Stillsetzung der Windenergieanlage bzw. des Rotors sowie deren Kontrolle von der Fernüberwachungszentrale. Dadurch, dass die Stillstandsposition des Rotors von zwei Erfassungseinrichtungen unabhängig voneinander erfasst wird und an die Fernüberwachungszentrale bzw. das Fernüberwachungssystem übermittelt wird, wird zweifach oder mehrfach die Stillsetzung des Rotors in einer vorbestimmten Stellung, z.B. Y-Stellung des Rotors mit einem senkrecht angeordneten Rotorblatt oder in der um 90° zur Vertikalen gedrehten Y-Stellung mit einem waagerechten Rotorblatt , unabhängig voneinander festgestellt, wobei nur bei einer (positiven) Verifizierung der Stillstandsposition eine Freigabe mittels der Signaleinrichtung erfolgt. Wird von einer der Erfassungseinrichtungen kein positives Stillstandssignal an die Auswerteeinrichtung der Fernüberwachungszentrale gemeldet, erfolgt auch keine Freigabe bzw. keine entsprechende Anzeige der Signaleinrichtung an der Windenergieanlage.

Bei parallelen und unabhängigen Verifizierungen der gewünschten Stillstandsposition des Rotors wird die Signaleinrichtung der Windenergieanlage aktiviert, so dass der Pilot bzw. das Wartungspersonal erkennt, dass die Windenergieanlage zum Anflug freigegeben wird. Dadurch kann sich der Helikopter mit dem Wartungspersonal beispielsweise im Schwebflug über einer Plattform oder Hebebühne (hoisting platform) der Windenergieanlage positionieren, so dass aus dem schwebenden Helikopter das Wartungspersonal sowie Werkzeug und Ersatzteile mittels einer Seilbinde vom Helikopter auf die Plattform heruntergelassen werden.

Um den Rotor verdrehsicher in der Stillstandsposition zu halten, ist es möglich, dass mittels einer entsprechenden Bremsvorrichtung der Rotor festgebremst wird. Beispielsweise sind derartige Bremsvorrichtungen mit Scheibenbremsen versehen, um über einen Reibschluss den Rotor festzubremsen. Darüber hinaus ist es möglich, nach einer Abbremsung des Rotors im Stillstand eine (Rotor-) Arretiervorrichtung zu aktivieren, wodurch mittels eines Formschlusses beispielsweise ein (Arretier-)Bolzen in eine Arretierscheibe an der Rotorwelle eingebracht wird.

Durch die mehrfache und separate Erfassung der Stillstandsposition bzw. des Stillsetzens des Rotors wird die Sicherheit für das Wartungspersonal erhöht, da an verschiedenen Stellen der Windenergieanlage die Stillstandsposition bzw. das Stillsetzen des Rotors festgestellt wird. Beispielsweise ist dadurch eine hierarchische Sicherungskette oder dergleichen für die Durchführung von Wartungsarbeiten an einer Offshore-Windenergieanlage möglich. Insgesamt wird somit eine doppelte Sicherung bzw. eine Mehrfachsicherung vor der Durchführung der Wartungsarbeiten erreicht.

Darüber hinaus ist in einer Ausgestaltung des Verfahrens vorgesehen, dass eine erste Erfassungseinrichtung an einer Rotorbremsvorrichtung und/oder einer Rotorarretiervorrichtung für den Rotor vorgesehen ist, wobei mittels der ersten Erfassungseinrichtung der Stillstand des Rotors, vorzugsweise nach einer Bremsung und/oder Arretierung des Rotors, erfasst wird. Hierzu ist beispielsweise an der Rotorbremse oder an der Rotorarretiervorrichtung ein Sensor vorgesehen, mittels dem erfasst wird, ob der Rotor festgebremst ist oder der Rotor arretiert ist. Entsprechend wird mit der ersten Erfassungseinrichtung die Rotorbremsvorrichtung und/oder die Rotorarretiervorrichtung überwacht, so dass nur bei erfolgter Bremsung und/oder Arretierung ein entsprechendes positives Stillstandssignal an die Auswerteeinrichtung in der Fernüberwachungszentrale übermittelt wird. Nur, wenn die Rotorbremse einwandfrei geschlossen ist oder der Bolzen bei der Rotorarretiervorrichtung fehlerfrei eingelegt ist, wird dieses (positive) Stillstandssignal an die Auswerteeinrichtung übermittelt. Bei ungenügender Bremsung oder bei nicht einwandfreier Arretierung wird folglich kein entsprechendes positives Stillstandssignal übermittelt.

Darüber hinaus ist in einer bevorzugten Ausführungsform des Verfahrens vorgesehen, dass eine zweite Erfassungseinrichtung als eine optische Überwachungseinrichtung, vorzugsweise Kamera, ausgebildet ist, wobei mittels der optischen Überwachungseinrichtung wenigstens ein oder mehrere Bilder des Rotors, vorzugsweise nach Erreichen der Stillstandsposition des Rotors, aufgenommen werden. Dazu ist beispielsweise die optische Überwachungseinrichtung als Kamera ausgebildet, wobei die Kamera an der Außenseite der Windenergieanlage beispielsweise auf der Gondel angeordnet ist, um entsprechende Bilder des verdrehsicher gehaltenen sowie stillgesetzten Rotors an die Auswerteeinrichtung zu übermitteln. Im Rahmen der Erfindung kann mittels der Kamera zudem die Phase des Stillsetzens des Rotors online überwacht werden. Durch die optische Kontrolle ist es möglich, entsprechend die Position des stillgesetzten Rotors zu überprüfen, wobei mittels einer oder mehrerer Kameras auf optische Weise die Rotorposition festgehalten wird, ob der Rotor in der bevorzugten **Y-Stellung** mit einem senkrecht angeordneten Rotorblatt oder in der um 90° zur Vertikalen gedrehten Y-Stellung mit einem waagerechten Rotorblatt festgesetzt ist. Diese Prüfung kann sowohl durch Personal in der Fernüberwachungszentrale oder durch optische Verfahren bzw. durch eine entsprechende Auswertung der Bilder erkannt werden. Hierbei wird mittels einer auf den Rotor gerichteten Kamera der Bewegungszustand des Rotors erfasst, wobei die Bilder des Bewegungszustandes des, vorzugsweise stillgesetzten, Rotors an die Fernüberwachungseinrichtung übermittelt werden.

Dazu ist insbesondere vorgesehen, dass von der ersten Erfassungseinrichtung wenigstens ein Stillstandssignal und/oder von der zweiten Erfassungseinrichtung wenigstens ein oder mehrere Bilder an eine Auswerteeinrichtung, vorzugsweise einer Auswerteeinrichtung einer Fernüberwachungseinrichtung bzw. -zentrale, übermittelt werden. Mittels der Auswerteeinrichtung werden die von den beiden Erfassungseinrichtungen übertragenen Informationen entsprechend ausgewertet, so dass verifiziert wird, ob der Rotor stillgesetzt ist und bei einer erfolgreichen Stillsetzung auch in der gewünschten vorbestimmten Stellung, z.B. Y-Stellung, verdrehsicher gehalten wird oder arretiert ist, so dass anschließend die Signaleinrichtung an der Windenergieanlage die Freigabe für einen Anflug durch einen Helikopter anzeigt. Hierdurch wird auf optische Weise dem Piloten des Helikopters angezeigt, ob der Rotor in der bevorzugten Y-Stellung (d.h. ein Rotorblatt ist senkrecht angeordnet) oder in der um 90° gedrehten Y-Stellung (d.h. ein Rotorblatt ist horizontal ausgerichtet) gebracht ist, wodurch ein sicherer Anflug für den Piloten möglich ist.

Darüber hinaus ist im Rahmen der Erfindung vorgesehen, dass zur weiteren Erhöhung der Sicherheit die Funktionssicherheit der Erfassungseinrichtung und/oder die Funktionssicherheit der Signaleinrichtung überwacht wird, wobei vorzugsweise die Überwachung der Erfassungseinrichtung und der Signaleinrichtung über die Fernüberwachungseinrichtung erfolgt. Dadurch wird gewährleistet, dass nur bei einwandfrei funktionierenden Erfassungseinrichtungen und Signaleinrichtungen und bei Verifizierung der von den Erfassungseinrichtungen abgegebenen Signale eine Freigabe zum Anflug der Windenergieanlage möglich ist.

Erfindungsgemäß wird in Abhängigkeit der unabhängigen Verifizierungen durch die Fernüberwachungseinrichtung die Signaleinrichtung an der Windenergieanlage aktiviert, so dass ein Helikopter bzw. ein anderes Transportmittel sich an die freigegebene Windenergieanlage annähern darf, wodurch ein sicherer Zugang für den Helikopter bzw. das Transportmittel, z.B. Schiff, freigegeben wird.

Insbesondere wird in einer Ausgestaltung die Signaleinrichtung von der Fernüberwachungseinrichtung gesteuert, insbesondere aktiviert. Vorzugsweise wird weiterhin vor oder nach dem Stillsetzen des Rotors die Maschinengondel gedreht und/oder, insbesondere unter Verwendung einer Gondelarretiereinrichtung, arretiert, wobei insbesondere die Maschinengondel bzw. das Maschinenhaus auf dem Turm quer zur Windrichtung angeordnet und/oder arretiert wird. Hierzu ist beispielsweise vorgesehen, dass eine Windrichtungsanzeigevorrichtung, die auf der Maschinengondel angeordnet ist, zwischen der optischen Überwachungseinrichtung, vorzugsweise Kamera, und dem Rotor angeordnet ist, so dass mittels der optischen Überwachungseinrichtung neben der Position des Rotors auch die Windrichtungsanzeigevorrichtung gleichzeitig erfasst wird und anhand der durch die Windrichtungsanzeigevorrichtung ermittelten Windrichtung die Maschinengondel entsprechend ausgerichtet wird. Hierzu wird insbesondere die Maschinengondel in ihrer Längsausrichtung quer, insbesondere senkrecht, zur Windrichtung angeordnet, so dass der Triebstrang der Windenergieanlage ebenfalls quer bzw. senkrecht zur Windrichtung angeordnet ist. Somit ist es möglich, dass mittels der optischen Überwachungseinrichtung als Erfassungseinrichtung gleichzeitig die Windrichtung und die Position bzw. die Stellung des Rotors überwacht werden. Dabei ist es im Rahmen der Erfindung in einer Ausgestaltung vorgesehen, dass die Maschinengondel in einer oder der vorbestimmten Position arretiert wird.

Dadurch, dass die optische Überwachungseinrichtung beispielsweise auf der Maschinengondel angeordnet ist, wobei das Erkennungsfeld bzw. die Blickrichtung der optischen Überwachungseinrichtung auf den Rotor gerichtet ist, ist es möglich bei einer Ausgestaltung, dass die Drehung und/oder die Positionierung der Maschinengondel optisch überwacht werden und/oder dass die Arretierung der Maschinengondel überwacht wird. Hierbei ist die Windanzeigevorrichtung zwischen der optischen Überwachungseinrichtung und dem Rotor im Blickfeld bzw. im Erkennungsfeld der optischen Überwachungseinrichtung angeordnet. Insbesondere wird vor Aussendung bzw. vor Anzeige des Stillstands des Rotors durch die Signaleinrichtung die Maschinengondel gedreht und/oder arretiert wird, so dass diese quer zur Windrichtung ausgerichtet ist.

Darüber hinaus wird die Aufgabe gelöst durch eine Windenergieanlage mit einem an einer Maschinengondel angeordneten Rotor, wobei die Maschinengondel auf einem Turm drehbar angeordnet ist, wobei eine Stillsetzungsvorrichtung für den Rotor vorgesehen ist, so dass der Rotor in einer Stillstandsposition verdrehsicher gehalten wird oder ist, wobei die Windenergieanlage dadurch weitergebildet wird, dass wenigstens zwei Erfassungseinrichtungen zum Erfassen der Stillstandsposition des Rotors oder der Rotorposition vorgesehen sind, wobei die wenigstens zwei Erfassungseinrichtungen unabhängig voneinander betrieben werden oder betreibbar sind, so dass die Stillstandsposition des Rotors in Abhängigkeit von den wenigstens zwei Erfassungseinrichtungen jeweils separat mittels einer Auswerteeinrichtung verifizierbar ist oder verifiziert wird, und wobei der stillgesetzte vorbestimmte Zustand des Rotors bzw. die Stillstandsposition des Rotors nach den Verifizierungen der durch die wenigstens zwei Erfassungseinrichtungen erfassten Stillstandspositionen des Rotors mittels einer Signaleinrichtung, insbesondere einer Signaleinrichtung der Windenergieanlage, anzeigbar oder angezeigt ist.

Hierbei wird nach einer entsprechenden Anforderung zum Stillsetzen der Windenergieanlage zu Wartungszwecken die Windenergieanlage und damit auch der Rotor nach dem Stillsetzen in einer Stillstandsposition verdrehsicher gehalten, wobei der Bewegungszustand bzw. die Ruheposition des stillgesetzten Rotors mittels einer optischen Überwachungseinrichtung als eine Erfassungseinrichtung und mittels eines Stillstandssensors als eine weitere Erfassungseinrichtung und einer mit den Erfassungseinrichtungen verbundenen Auswerteeinrichtung festgestellt wird, ob der Rotor stillgesetzt ist und ob der stillgesetzte Rotor auch in einer vorbestimmten Stillstandsposition, z.B. Y-Position, gehalten wird. Hierbei werden die Erfassungsergebnisse von den Erfassungseinrichtungen entsprechend verifiziert, wobei in Abhängigkeit der Verifizierungen der beispielsweise optischen Überwachung und beispielsweise in Abhängigkeit eines Bewegungssensors der Stillstandszustand des Rotors mittels der Signaleinrichtung angezeigt wird. Erst nach mehrfacher, insbesondere doppelter, Verifizierung des Stillstands des Rotors, wird durch die Signaleinrichtung an der Windenergieanlage einem Piloten beispielsweise angezeigt, dass die Windenergieanlage für einen Anflug freigegeben wird bzw. ist.

Dazu ist weiter vorgesehen, dass eine Rotorbremsvorrichtung und/oder eine Rotorarretiervorrichtung eine erste Erfassungseinrichtung aufweisen, um nach einer Festbremsung oder Arretierung des Rotors der Auswerteeinrichtung zu übermitteln, dass der Rotor durch eine Festbremsung oder durch eine Arretiervorrichtung stillgesetzt ist. Beispielsweise ist an einer Rotorwelle eine Schaltkonstruktion in Form einer Blechlasche oder dergleichen mit einem induktiven Näherungsschalter angebracht. Befindet sich der Rotor in der bevorzugten Y-Position (innerhalb vorbestimmter Toleranzen), so wird mittels einer entsprechenden Schaltkonstruktion beispielsweise ein Relais oder dergleichen geschaltet. In Reihe mit diesem Relais ist weiterhin eine Überwachungseinrichtung der Rotorbremse vorgesehen. Nur wenn die Rotorbremse geschlossen ist und der Rotor sich in der bevorzugten Y-Position befindet, wird die Signaleinrichtung auf dem Dach der Maschinengondel aktiviert.

Außerdem kann zur weiteren Verbesserung der Sicherheit in einer weiteren Ausgestaltung vorgesehen sein, dass die Azimutdrehung der Maschinengondel mit einer Verriegeleinrichtung ausgebildet ist, wobei nach Verriegelung ein entsprechendes Signal an die Auswerteeinrichtung übermittelt wird. Erst nach einer Verifizierung der Verriegelung wird die Freigabe mittels der Signaleinrichtung entsprechend angezeigt.

Überdies zeichnet sich eine Weiterbildung der Windenergieanlage dadurch aus, dass eine zweite Erfassungseinrichtung als optische Überwachungseinrichtung, vorzugsweise Kamera, ausgebildet ist, wobei weiterhin die Kamera auf den Rotor gerichtet ist, so dass im Blickfeld oder Erkennungsfeld der Kamera die Stellung der Rotorblätter gut erkennbar ist. Beispielsweise ist dabei die Überwachungseinrichtung in der Mitte der Gondel angeordnet, um auf einfache Weise die symmetrische Stellung der nach oben weisenden Rotorblätter bei einer Y-Stellung des Rotorblatts zu erkennen.

Außerdem ist es bei der Weiterbildung der Windenergieanlage günstig, wenn die Auswerteeinrichtung als Auswerteeinrichtung einer Fernüberwachungseinrichtung ausgebildet ist, wobei die wenigstens zwei unabhängigen Erfassungseinrichtungen mit der Auswerteeinrichtung der Fernüberwachungseinrichtung verbunden sind.

Ferner wird die Aufgabe gelöst durch einen Windpark mit wenigstens einer Windenergieanlage, wie sie voranstehend beschrieben ist, und einer eine Auswerteeinrichtung aufweisenden Fernüberwachungseinrichtung, wobei die wenigstens zwei Erfassungseinrichtungen zum Erfassen der Stillstandsposition des Rotors oder der Rotorposition mit einer Auswerteeinrichtung verbunden sind und die Auswerteeinrichtung mittels einer an der Windenergieanlage angeordneten Signaleinrichtung verbunden ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Seitenansicht einer Offshore Windenenergieanlage und
- Fig. 2: schematisch eine Draufsicht auf die Windenergieanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

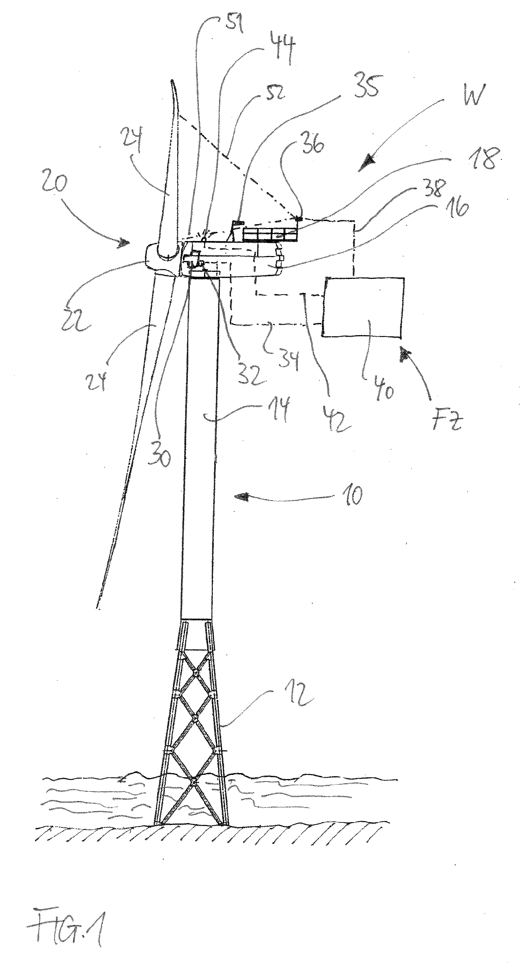

Fig. 1 zeigt in einer schematischen Seitensicht einer Windendenergieanlage W. Die Windendenergieanlage W weist einen Turm 10 auf, der einen auf einem Gewässergrund oder Meeresgrund verankerten Gitterturm 12 umfasst, auf dem ein geschlossener Rohrturm 14, vorzugsweise bestehend aus zusammengesetzten Turmsegmenten, angeordnet ist.

Auf dem Rohrturm 14 ist ein um eine Vertikalachse drehbare Maschinengondel 16 am oberen Ende des Rohrturmes 14 angeordnet. An der Maschinengondel 16 ist ein Rotor 20 mit an einer Rotornabe 22 angeordneten Rotorblättern angeordnet. Der Rotor 20 weist insgesamt drei Rotorblätter 24 auf, die gleichmäßig über den Umfang der Rotornabe 22 angeordnet sind.

In der Maschinengondel 16 sind beispielsweise eine Rotorwelle, die mit der Rotornabe 22 verbunden ist, und ein mit der Rotorwelle verbundener Triebstrang und ein damit verbundener Generator angeordnet.

Auf der Maschinengondel 16 ist auf dem dem Rotor 20 abgewandten Ende eine Plattform 18, beispielsweise in Form einer sogenannten Hoisting-Plattform oder dergleichen, auf der Oberseite der Maschinengondel 16 angeordnet. Hierbei kann die Plattform 18 auch als Landeplattform für einen Hubschrauber ausgebildet sein.

Der Rotor 20 befindet sich bei der in Fig. 1 dargestellten Position in einer Y-Stellung, so dass ein Rotorblatt 24 senkrecht nach unten zeigt.

Um den Rotor 20 in der bevorzugten Y-Stellung, bei der die nach oben weisenden oberen Rotorblätter 24 V-förmig angeordnet sind, zu arretieren, ist der Rotor 20 über die Rotornabe 22 drehfest mit einer Rotorwelle verbunden, wobei mit der Rotorwelle eine koaxial zur Rotorachse angeordnete Arretierungsscheibe einer schematisch bezeichneten Arretierungsvorrichtung 30 verbunden ist.

Darüber hinaus verfügt die Windenergieanlage W über eine Bremsvorrichtung, wobei die Bremsvorrichtung eine drehfest mit der Rotorwelle verbundene und koaxial dazu angeordnete Bremsscheibe sowie an der Bremsscheibe angeordnete Bremsbacken aufweist.

Dabei ist im Rahmen der Erfindung vorgesehen, dass die Maschinengondel 16 nach Positionierung auf dem Rohrturm 14 unter Verwendung einer Gondelarretiereinrichtung arretiert wird. Die Arretierung der Maschinengondel 16 wird dabei vorteilhafterweise mittels einer entsprechenden Überwachungseinrichtung überwacht, wobei in einer Ausgestaltung die Überwachungseinrichtung für die Arretierung der Maschinengondel 16 mit einer Auswerteeinrichtung, insbesondere einer Fernüberwachungszentrale, verbunden ist. Vor oder nach einer festgestellten Arretierung der Maschinengondel 16 kann die Stillsetzung des Rotors 20 sowie die Freigabe für einen Piloten zum Anflug dieser Windenergieanlage durch einen Hubschrauber durchgeführt werden oder erfolgen.

Zur Arretierung des Rotors 20 wird der Rotor 20 mittels der (aus Gründen der Übersichtlichkeit nicht dargestellten) Bremsvorrichtung nach Initialisierung der Stillsetzung des Rotors 20 abgebremst, so dass der Rotor 20 nach der Abbremsung in der Y-Position, beispielsweise mittels eines Arretierungsbolzens der Arretierungsvorrichtung 30 verdrehsicher gehalten wird.

Darüber hinaus ist an der Arretierungsvorrichtung 30 ein Sensor 32 angeordnet, der beispielsweise die Position des Arretierungsbolzens (nicht arretiert/arretiert) entsprechend überwacht. Der Sensor 32 ist über eine entsprechende Leitung 34 mit einer Auswerteeinrichtung 40 einer Fernüberwachungszentrale FZ verbunden. Hierbei wird mittels des Sensors 32 die Arretierung und damit auch der Stillstand des Rotors 30 festgestellt, wobei der Sensor 32 eine Art Stillstandssignal an die Auswerteeinrichtung 40 übermittelt.

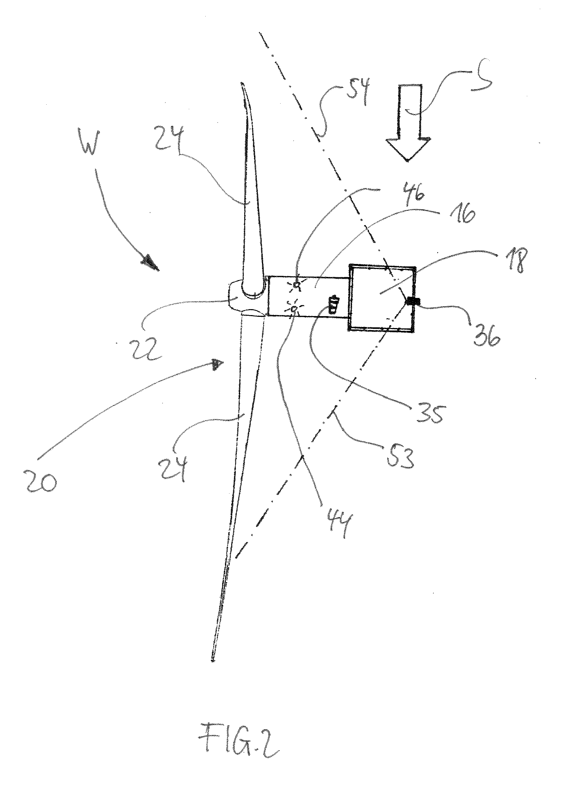

Darüber hinaus ist am hinteren Ende der Plattform 18 eine Kamera 36 mittig bezüglich der Breite der Maschinengondel 16 angeordnet, wobei die Blickrichtung der Kamera 36 auf den Rotor 20 bzw. auf die Rotorblätter im Blickfeld oberhalb der Maschinengondel 16 gerichtet ist. Das Blickfeld oder bzw. Sichtfeld der Kamera 36 ist mittels der strichpunktierten Linien 51, 52, 53, 54 in den Figuren 1 und 2 schematisch eingezeichnet und durch die Linien 51, 52, 53, 54 begrenzt.

Insbesondere ist die Kamera 36 als Webcam oder dergleichen mit einem Weitwinkelobjektiv ausgebildet, wobei der Öffnungswinkel der Kamera 36 so angeordnet ist, dass der obere Rotorbereich im Blickfeld der Kamera 36 liegt. Ferner ist zwischen der am hinteren Ende der Plattform 18 angeordneten Kamera 36 im Blickfeld der Kamera 36 eine Windrichtungsanzeige 35 zwischen der Kamera 36 und dem Rotor 20 angeordnet. Die Windrichtungsanzeige 35, beispielsweise in Form eines Windsacks oder einer, vorzugsweise als Windrichtungssensor ausgebildeten, Windfahne oder eines Fähnchens, zeigt die Richtung des vorherrschenden Windes auf optische Weise an, aus der der Wind kommt.

Die Kamera 36 ist über eine Verbindungsleitung 38 mit der Auswerteeinrichtung 40 der Fernüberwachungszentrale FZ verbunden, so dass nach Stillsetzen des Rotors 20 ein oder mehrere Bilder der Rotorblätter 24 im oberen Rotorbereich von der Kamera 36 aufgenommen werden und an die Auswerteeinrichtung 40 übermittelt werden.

Die Auswerteeinrichtung 40 kann beispielsweise zusätzlich über einen Monitor über eine Anzeige verfügen, so dass das Bedienungspersonal in der Fernüberwachungszentrale FZ auf optische Weise erkennen kann ob die oberen Rotorblätter gleichmäßig V-förmig bzw. symmetrisch angeordnet sind. In einer Ausführungsform ist es auch denkbar, dass durch eine automatische Bilderkennung die V-förmige Anordnung der oberen Rotorblätter 24 ausgewertet wird.

Dadurch, dass mittels des Sensors 32 und mittels der als Kamera 36 ausgebildeten optischen Überwachungseinrichtung Informationen über den stillgesetzten Rotor bzw. Außenaufnahmen an die Auswerteeinrichtung 40 übermittelt werden, und der Stillstand des Rotors 20 in der bevorzugten Y-Stellung verifiziert wird, wird durch die doppelte Kontrolle die Sicherheit an der stillgesetzten Windenergieanlage W erhöht. Hierdurch wird auf doppelte Weise verifiziert, ob sich der Rotor 20 auch tatsächlich in der Y-Stellung befindet. Ist dies der Fall, werden mittels der Auswerteeinrichtung 40 über eine Verbindungsleitung 42 die auf der Oberseite der Maschinengondel 16 angeordneten Signallichter 44, 46 (vgl. Fig. 2) auf optische Weise, beispielsweise einem Helikopterpilot beim Anflug der Windenergieanlage W, angezeigt, dass der Rotor 20 sich auch in der gewünschten Y-Stellung im Stillstand befindet, so dass der Annäherungsflug eingeleitet werden kann.

In einer bevorzugten Ausführungsform kann auch die ohnehin für die Flugsicherheit erforderliche Hindernisbefeuerung als Signallicht genutzt werden, indem beispielsweise die Anzeige der Freigabe durch eine besondere oder vorbestimmte Blinkfrequenz oder durch eine im Normalfall nicht genutzte Kombination von weißer Tagesbefeuerung und roter Nachtbefeuerung erfolgt.

In Fig. 2 ist eine schematische Draufsicht von oben auf die Windenergieanlage W gezeigt, wobei gemäß in der in Fig. 2 dargestellten Position des Rotors 20 die oberseitigen Rotorblätter nicht gleichmäßig im Blickfeld der Kamera 36 angeordnet sind, so dass sich der stillgesetzte Rotor 20 nicht in der bevorzugten Y-Stellung mit einem zum Boden vertikal ausgerichteten Rotorblatt befindet. Hierbei ist der Rotor unsymmetrisch im Blickfeld der Kamera 36 angeordnet.

Von dem stillgesetzten Rotor 20 werden die von der Kamera 36 aufgenommenen Bilder an die Auswerteeinrichtung 40 übermittelt, so dass beispielsweise mittels eines Bilderkennungsverfahrens festgestellt wird, dass die oberseitigen Rotorblätter 24 nicht gleichmäßig, d.h. nicht symmetrisch angeordnet sind. In diesem Fall werden selbst bei Vorliegen der Information durch den Sensor 32, dass der Rotor arretiert ist, die Signallichter 44, 46 nicht aktiviert, so dass einem Piloten keine Freigabe zum Anflug dieser Windenergieanlage erteilt wird.

Erst wenn die oberseitigen Rotorblätter 24 sich in der symmetrischen V-förmigen Stellung befinden bzw. der gesamte arretierte Rotor 20 in der Y-Stellung verdrehsicher ausgerichtet ist, werden die Signallichter 44, 46 aktiviert.

In einer weiteren bevorzugten Stellung des stillgesetzten Rotors ist bei einem Rotor mit drei Rotorblättern ein Rotorblatt in einer waagerechten Position angeordnet, wobei die Rotorblattspitzen der beiden anderen Rotorblätter schräg nach oben und schräg nach unten weisen. Hierbei ist die Y-artige Anordnung der Rotorblätter so positioniert, dass ein Rotorblatt waagerecht in der Stillstandsposition ausgerichtet ist, wodurch die Y-Anordnung des Rotors (mit senkrecht angeordnetem Rotorblatt) um 90° zur Vertikalen verdreht ist.

In Fig. 2 ist außerdem dargestellt, dass die Gondel 16 senkrecht zur schematisch eingezeichneten vorherrschenden Windströmung S ausgerichtet ist, wodurch erst nach Anordnung und vorzugsweise nach einer Arretierung der Maschinengondel 16 senkrecht zur Windströmung S eine Freigabe für einen Anflug durch einen Helikopter optisch angezeigt wird. Ist die Maschinengondel 16 in Windrichtung ausgerichtet, d.h. dass der Wind aus Richtung des Rotors 20 kommt, werden die Signallichter 44, 46 nicht aktiviert, wodurch auch keine Freigabe erfolgt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Turm
- 12: Gitterturm
- 14: Rohrturm
- 16: Maschinengondel
- 18: Plattform
- 20: Rotor
- 22: Rotornabe
- 24: Rotorblatt
- 30: Arretiervorrichtung
- 32: Sensor
- 34: Leitung
- 36: Kamera
- 38: Verbindungsleitung
- 40: Auswerteeinrichtung
- 42: Verbindungsleitung
- 44: Signallicht
- 46: Signallicht
- 51, 52, 53, 54: Linie
- W: Windenergieanlage
- S: Windrichtung
- FZ: Fernüberwachungszentrale

## Patentansprüche

1. Verfahren zum Betreiben einer Windenergieanlage (W), die einen an einer Maschinengondel (16) angeordneten Rotor (20) aufweist, wobei die Maschinengondel (16) auf einem Turm angeordnet ist, wobei der Rotor (20) in eine Stillstandsposition gebracht wird, **dadurch gekennzeichnet, dass** die Stillstandsposition des Rotors (20) jeweils von wenigstens zwei oder mehr unabhängig voneinander betriebenen oder betreibbaren Erfassungseinrichtungen (32, 36) unabhängig erfasst wird, wobei die durch eine erste Erfassungseinrichtung (32) erfasste Stillstandsposition des Rotors (20) verifiziert wird und wobei die durch die zweite Erfassungseinrichtung (36) erfasste Stillstandsposition des Rotors (20) verifiziert wird, wobei nach Verifizierung der durch die wenigstens zwei Erfassungseinrichtungen (32, 36) erfassten Stillstandspositionen mit einer vorbestimmten Stillstandsposition des Rotors (20) mittels einer Signaleinrichtung (44, 46), insbesondere einer Signaleinrichtung (44, 46) der Windenergieanlage (W), der Stillstand des Rotors (20) angezeigt wird.

2. Verfahren nach Anspruch 1, **dadurch gekennzeichnet, dass** die erste Erfassungseinrichtung (32) an einer Rotorbremsvorrichtung und/oder Rotorarretiervorrichtung (30) für den Rotor (20) vorgesehen ist, wobei mittels der ersten Erfassungseinrichtung der Stillstand des Rotors (20) vorzugsweise nach einer Bremsung und/oder Arretierung des Rotors (20), erfasst wird.

3. Verfahren nach Anspruch 1 oder 2, **dadurch gekennzeichnet, dass** die zweite Erfassungseinrichtung (36) als eine optische Überwachungseinrichtung, vorzugsweise Kamera (36), ausgebildet ist, wobei mittels der optischen Überwachungseinrichtung wenigstens ein oder mehrere Bilder nach Erreichen der Stillstandsposition des Rotors (20) aufgenommen werden.

4. Verfahren nach Anspruch 2 oder 3, **dadurch gekennzeichnet, dass** von der ersten Erfassungseinrichtung (32) wenigstens ein Stillstandssignal und/oder von der zweiten Erfassungseinrichtung (36) wenigstens ein oder mehrere Bilder an eine Auswerteeinrichtung (40), vorzugsweise einer Auswerteeinrichtung (40) einer Fernüberwachungseinrichtung (FZ), übermittelt werden.

5. Verfahren nach Anspruch 4, **dadurch gekennzeichnet, dass** von der Fernüberwachungseinrichtung (FZ) die Signaleinrichtung (44, 46) gesteuert, insbesondere aktiviert, wird.

6. Verfahren nach einem der Ansprüche 1 bis 5, **dadurch gekennzeichnet, dass** vor oder nach dem Stillsetzen des Rotors (20) die Maschinengondel (16) gedreht und/oder arretiert wird, wobei insbesondere die Maschinengondel (16) quer zur Windrichtung (S) angeordnet und/oder arretiert wird.

7. Verfahren nach Anspruch 6, **dadurch gekennzeichnet, dass** die Drehung und/oder die Positionierung der Maschinengondel (16) optisch überwacht werden und/oder dass die Arretierung der Maschinengondel (16) überwacht wird.

8. Windenergieanlage (W) mit einem an einer Maschinengondel (16) angeordneten Rotor (20), wobei die Maschinengondel (16) auf einem Turm (10) angeordnet ist, wobei eine Stillsetzungsvorrichtung für den Rotor (20) vorgesehen ist, so dass der Rotor (20) in einer Stillstandsposition verdrehsicher gehalten wird oder ist, **dadurch gekennzeichnet, dass** wenigstens zwei Erfassungseinrichtungen (32, 36) zum Erfassen der Stillstandsposition des Rotors (20) oder der Rotorposition vorgesehen sind, wobei die wenigstens zwei Erfassungseinrichtungen (32, 36) unabhängig voneinander betrieben werden oder betreibbar sind, so dass die Stillstandsposition des Rotors (20) in Abhängigkeit von den wenigstens zwei Erfassungseinrichtungen (32, 36) jeweils separat mittels einer Auswerteeinrichtung (40) verifizierbar ist oder verifiziert wird, und wobei der stillgesetzte vorbestimmte Zustand des Rotors (20) nach den Verifizierungen der durch die wenigstens zwei Erfassungseinrichtungen (32, 36) erfassten Stillstandspositionen des Rotors (20) mittels einer Signaleinrichtung (44, 46), insbesondere einer Signaleinrichtung (44, 46) der Windenergieanlage (W), anzeigbar oder angezeigt ist.

9. Windenergieanlage (W) nach Anspruch 8, **dadurch gekennzeichnet, dass** eine Rotorbremsvorrichtung und/oder eine Rotorarretiervorrichtung (30) eine erste Erfassungseinrichtung (32) aufweisen.

10. Windenergieanlage (W) nach Anspruch 8 oder 9, **dadurch gekennzeichnet, dass** eine zweite Erfassungseinrichtung (36) als optische Überwachungseinrichtung, vorzugsweise Kamera (36), ausgebildet ist.

11. Windenergieanlage (W) nach einem der Ansprüche 8 bis 10, **dadurch gekennzeichnet, dass** die Auswerteeinrichtung (40) als Auswerteeinrichtung (40) einer Fernüberwachungseinrichtung (FZ) ausgebildet ist, wobei die wenigstens zwei unabhängigen Erfassungseinrichtungen (32, 36) mit der Auswerteeinrichtung (40) der Fernüberwachungseinrichtung (FZ) verbunden sind.

12. Windpark mit wenigstens einer Windenergieanlage (W) nach einem der Ansprüche 8 bis 11 und einer eine Auswerteeinrichtung aufweisenden Fernüberwachungseinrichtung (FZ), wobei die wenigstens zwei Erfassungseinrichtungen (32, 36) zum Erfassen der Stillstandsposition des Rotors (20) oder zum Erfassen der Rotorposition mit der Auswerteeinrichtung (40) verbunden sind und die Auswerteeinrichtung (40) mittels einer an der Windenergieanlage (W) angeordneten Signaleinrichtung (44, 46) verbunden ist.

## Claims

1. A method of operating a wind turbine (W), which includes a rotor (20) arranged on a machine housing (16), wherein the machine housing (16) is arranged on a tower, wherein the rotor (20) is brought into the stationary position, **characterised in that** the stationary position of the rotor is detected independently by at least two or more detection devices (32, 36), which are operated or operable independently of one another, wherein the stationary position of the rotor detected by a first detection device (32) is verified and wherein the stationary position of the rotor (20) detected by the second detection device (36) is verified, wherein after verification of the stationary positions detected by the at least two detection devices (32, 36) with a pre-determined stationary position of the rotor (20), the standstill of the rotor (20) is indicated by means of a signalling device (44, 46), particularly a signalling device (44, 46) of the wind turbine.

2. A method as claimed in Claim 1 , **characterised in that** the first detection device (32) is provided on a rotor braking device and/or locking device (30) for the rotor (20) wherein the standstill of the rotor (20) is detected by means of the first detection device, preferably after braking and/or locking of the rotor (20).

3. A method as claimed in Claim 1 or 2, **characterised in that** the second detection device (36) is constructed in the form of an optical monitoring device, preferably a camera (36), wherein at least one or more images are recorded after reaching the stationary position of the rotor by means of the optical monitoring device.

4. A method as claimed in Claim 2 or 3, **characterised in that** at least one standstill signal is transmitted by the first detection device (32) and/or at least one or more images are transmitted by the second detection device (36) to an analysis device (40), preferably an analysis device (40) of a remote monitoring device (FZ).

5. A method as claimed in Claim 4, **characterised in that** the signalling device (44, 46) is controlled, particularly activated, by the remote monitoring device (FZ).

6. A method as claimed in one of Claims 1 to 5, **characterised in that** before or after stopping the rotor (20) the machine housing (16) is rotated and/or locked, wherein, in particular, the machine housing (16) is arranged and/or locked transverse to the wind direction (S).

7. A method as claimed in Claim 6, **characterised in that** the rotation and/or the positioning of the machine housing (16) is monitored optically and/or that the locking of the machine housing (16) is monitored.

8. A wind turbine (W) with a rotor (20) arranged on a machine housing (16), wherein the machine housing (16) is arranged on a tower (10), wherein a stopping device for the rotor (20) is provided so that the rotor (20) is held rotationally fixed in a stationary position, **characterised in that** at least two detection devices (32, 26) are provided for detecting the stationary position of the rotor (20) or the rotor position, wherein the at least two detection devices (32, 36) are operated or operable separately from one another so that the stationary position of the rotor (20) is verifiable or is verified separately in dependence on the at least two detection devices by means of an analysis device (40) and wherein the stationary, pre-determined state of the rotor (20) may be indicated or is indicated after the verification of the standstill positions of the rotor (20) detected by the at least two detection devices (32, 36) by means of a signal device (44, 46) particularly a signal device (44, 46) of the wind turbine (W).

9. A wind turbine (W) as claimed in Claim 8, **characterised in that** a rotor braking device and/or a rotor locking device (30) has a first detection device (32).

10. A wind turbine (W) as claimed in Claim 8 or 9, **characterised in that** a second detection device (36) is constructed in the form of an optical monitoring device, preferably a camera (36).

11. A wind turbine (W) as claimed in one of Claims 8 to 10, **characterised in that** the analysis device (40) is constructed as an analysis device (40) of a remote monitoring device (FZ), wherein the at least two independent detection devices (32, 36) are connected to the analysis device (40) of the remote monitoring device (FZ).

12. A wind farm with at least one wind turbine (W) as claimed in one of Claims 8 to 11 and a remote monitoring device (FZ) including an analysis device, wherein the at least two detection devices (32, 36) for detecting the stationary position of the rotor (20) or for detecting the rotor position are connected to the analysis device (40) and the analysis device (40) is connected by means of a signalling device (44, 46) arranged on the wind turbine (W).

## Revendications

1. Procédé pour le fonctionnement d'une installation éolienne (W), comprenant une nacelle (16) disposée sur un rotor (20), ladite nacelle (16) étant montée sur une tour, dans lequel le rotor (20) est amené dans une position d'arrêt, **caractérisé en ce que** la position d'arrêt du rotor (20) est détectée dans chaque cas de manière indépendante par l'un des au moins deux moyens de détection (32, 36), lesdits moyens de détection étant utilisables ou utilisés de manière indépendante, la position d'arrêt du rotor (20) étant vérifiée par un premier moyen de détection (32) et la position d'arrêt du rotor (20) étant vérifiée par un deuxième moyen de détection (36), procédé dans lequel, après la vérification des au moins deux moyens de détection (32, 36) de l'arrêt du rotor (20) dans une position d'arrêt prédéterminée, la position d'arrêt du rotor (20) est affichée au moyen d'un dispositif de signalisation (44, 46), en particulier au moyen d'un dispositif de signalisation (44, 46) de l'installation éolienne (W).

2. Procédé selon la revendication 1, **caractérisé en ce que** ledit premier moyen de détection (32) est prévu sur un dispositif de freinage du rotor et/ou un dispositif de blocage du rotor (30) pour le rotor (20), dans lequel, par l'intermédiaire des premiers moyens de détection de l'arrêt du rotor (20), de préférence le freinage et/ou le verrouillage du rotor (20) est détecté.

3. Procédé selon la revendication 1 ou la revendication 2, **caractérisé en ce que** ledit deuxième moyen de détection (36) est un dispositif de surveillance optique, de préférence une caméra (36), dans lequel, au moyen du dispositif de surveillance optique, au moins une ou plusieurs images sont prises après avoir atteint la position d'arrêt du rotor (20).

4. Procédé selon la revendication 2 ou la revendication 3, **caractérisé en ce que** ledit premier moyen de détection (32) d'au moins un signal d'arrêt et/ou ledit deuxième moyen de détection (36) transmettent au moins une ou plusieurs images à un dispositif d'évaluation (40), le dispositif d'évaluation (40) étant de préférence un dispositif de surveillance à distance (FZ).

5. Procédé selon la revendication 4, **caractérisé en ce que** le dispositif de surveillance à distance (FZ) commande le dispositif de signalisation (44, 46), en particulier en le mettant en marche.

6. Procédé selon l'une quelconque des revendications 1 à 5, **caractérisé en ce que** la nacelle (16) est mise en rotation avant ou après l'arrêt du rotor (20) et/ou est verrouillée, dans lequel en particulier la nacelle (16) est disposée de manière transversale par rapport à la direction du vent (S) et/ou est verrouillée.

7. Procédé selon la revendication 6, **caractérisé en ce que** la rotation et/ou le positionnement de la nacelle (16) est surveillée optiquement et/ou **en ce que** le verrouillage de la nacelle (16) est surveillé.

8. Installation éolienne (W) comprenant une nacelle (16) disposée sur un rotor (20), ladite nacelle (16) étant montée sur une tour (10), un dispositif d'arrêt pour le rotor (20) étant prévu de sorte que le rotor (20) est maintenu de manière non rotative dans une position stationnaire, **caractérisée en ce qu'**au moins deux moyens de détection (32, 36) sont prévus pour détecter la position d'arrêt du rotor (20) ou la position du rotor, les au moins deux moyens de détection (32, 36) devant être exploités indépendamment l'un de l'autre, ou être mis en oeuvre de sorte que la position d'arrêt du rotor (20) est vérifiable ou est vérifiée séparément en fonction d'au moins un des au moins deux moyens de détection (32, 36) au moyen d'un dispositif d'évaluation (40), la condition prédéterminée de l'arrêt du rotor (20) pouvant être, après vérification des au moins deux moyens de détection (32, 36) des positions d'arrêt du rotor (20), indiquée ou affichée au moyen d'un dispositif de signalisation (44, 46), en particulier au moyen d'un dispositif de signalisation (44, 46) de l'installation éolienne (W).

9. Installation éolienne (W) selon la revendication 8, **caractérisée en ce qu'**un dispositif de freinage du rotor et/ou un dispositif de verrouillage du rotor (30) comprennent un premier moyen de détection (32).

10. Installation éolienne (W) selon la revendication 8 ou la revendication 9, **caractérisée en ce qu'**un deuxième dispositif de détection (36) est un dispositif de surveillance optique, de préférence une caméra (36).

11. Installation éolienne (W) selon l'une quelconque des revendications 8 à 10, **caractérisée en ce que** le dispositif d'évaluation (40) est conçu en tant que dispositif d'évaluation (40) du dispositif de surveillance à distance (FZ), les au moins deux dispositifs de détection (32, 36) indépendants étant connectés au dispositif d'évaluation (40) du dispositif de surveillance à distance (FZ).

12. Parc éolien comprenant au moins une installation éolienne (W) selon l'une quelconque des revendications 8 à 11 et un dispositif d'évaluation comportant un dispositif de surveillance à distance (FZ), dans lequel les au moins deux moyens de détection (32, 36) de la position d'arrêt du rotor (20) ou de détection de la position du rotor sont connectés au dispositif d'évaluation (40), le dispositif d'évaluation (40) est connecté à un dispositif de signalisation (44, 46) de l'installation éolienne (W).
